(19) **Europäisches Patentamt / European Patent Office / Office européen des brevets**

(11) **EP 2 483 962 B1**

(12) **FASCICULE DE BREVET EUROPEEN**

(45) Date de publication et mention
de la délivrance du brevet:
**07.03.2018 Bulletin 2018/10**

(21) Numéro de dépôt: **10773115.0**

(22) Date de dépôt: **24.09.2010**

(51) Int Cl.:
**H01M 10/44** *(2006.01)*          **H01M 10/30** *(2006.01)*
**H01M 10/34** *(2006.01)*

(86) Numéro de dépôt international:
**PCT/FR2010/000638**

(87) Numéro de publication internationale:
**WO 2011/039428 (07.04.2011 Gazette 2011/14)**

(54) **PROCEDE DE CHARGE ET PROCEDE DE DETERMINATION D'UN CRITERE DE FIN DE CHARGE D'UNE BATTERIE A BASE DE NICKEL**

VERFAHREN ZUR AUFLADUNG EINER NICKELBATTERIE UND VERFAHREN ZUR DEFINITION EINES KRITERIUMS FÜR DAS ENDE DES LADEVORGANGS FÜR EINE NICKEL-BATTERIE

METHOD FOR CHARGING A NICKEL BATTERY AND METHOD FOR DETERMINING AN END-OF-CHARGE CRITERION FOR A NICKEL BATTERY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.09.2009 FR 0904661**

(43) Date de publication de la demande:
**08.08.2012 Bulletin 2012/32**

(73) Titulaires:
- **Commissariat à l'Énergie Atomique et aux Énergies Alternatives 75015 Paris (FR)**
- **BUBENDORFF Société Anonyme 68220 Attenschwiller (FR)**

(72) Inventeurs:
- **BRUN-BUISSON, David F-38470 Vatilieu (FR)**
- **LABRUNIE, Antoine F-75005 Paris (FR)**
- **PERICHON, Pierre F-38500 Voiron (FR)**

(74) Mandataire: **Talbot, Alexandre et al Cabinet Hecké 28 Cours Jean Jaures 38000 Grenoble (FR)**

(56) Documents cités:
**EP-A1- 0 980 130      EP-A1- 1 990 890
FR-A1- 2 808 927**

**Description**

**Domaine technique de l'invention**

L'invention est relative à un procédé de charge d'une batterie électrochimique à base de nickel, de capacité nominale prédéterminée, comportant au moins une mesure de la tension de la batterie et une mesure de la température représentative de la batterie, ladite batterie étant rechargée par une source d'énergie intermittente et à courant variable.

**État de la technique**

Ces dernières années, les nouvelles technologies ont permis de développer l'utilisation d'appareils électroniques nomades comme les ordinateurs portables, la téléphonie mobile ou encore les systèmes autonomes. Ces technologies ont rendu nécessaire l'amélioration des systèmes de stockage d'énergie pour obtenir une densité de stockage énergétique satisfaisant des appareils toujours plus énergétivores. De nos jours un système de stockage couramment utilisé est la batterie électrochimique à base de nickel. La technologie de batterie au nickel permet de stocker une quantité d'énergie optimale car son énergie volumique, de l'ordre de 350Wh/dm$^3$, est l'une des plus élevées connue à ce jour.

Les constructeurs de batteries au nickel recommandent une charge à courant constant, la capacité maximum des batteries est en général obtenue par une charge à 160% de la capacité nominale. Une des problématiques est de savoir à quel moment arrêter la charge, c'est-à-dire quel critère quantifiable et mesurable utiliser pour déterminer le moment où la capacité maximale est atteinte.

La méthode la plus utilisée est communément appelée la méthode du delta V négatif. En fait, lors d'une charge rapide d'une batterie NiCd, la tension aux bornes de la batterie atteint une valeur maximum Vmax lorsque la charge atteint une valeur voisine de 100% à 120% de la capacité nominale de la batterie. Ensuite, la tension aux bornes de la batterie redescend et lorsque la variation de cette tension devient supérieure à un certain seuil, la batterie est considérée comme chargée.

Une autre méthode, plutôt associée aux batteries de type NiMh, consiste à détecter l'absence de variation de la tension aux bornes de la batterie. En effet, pour ce type de batterie la variation du delta V est relativement faible et difficilement détectable. On attend donc après mesure d'un pic de tension que cette dernière se stabilise.

Il est aussi possible, dans le cas des batteries NiMh, de faire un rapport sur la variation de la température de la batterie en fonction du temps. Lorsque ce rapport dépasse un certain seuil la batterie est considérée comme chargée.

Toutes ces méthodes permettent d'assurer une capacité maximum de la batterie en réalisant une surcharge de cette dernière. La surcharge est classiquement comprise entre 20 et 60% de la capacité nominale, ce qui correspond à un surplus. La surcharge est imposée par l'apparition de phénomènes électrochimiques parasites liés à la décomposition de l'eau qui consomme de l'énergie et qu'il faut compenser pour procurer à un utilisateur la plus grande capacité lors de l'utilisation d'un appareil électronique alimenté en courant par ladite batterie.

Le document EP1990890 décrit un procédé de charge d'une batterie d'un système autonome. Le procédé comporte la mesure d'une température et permet le passage d'un premier mode de charge à un second mode de charge lorsqu'un seuil de tension est atteint. La fin de charge est classiquement réalisée par une élévation rapide de la température de la batterie.

Le document EP 0 980 130 A1 décrit un procédé de contrôle de la charge rapide d'accumulateur industriel à électrolyte alcalin.

**Objet de l'invention**

L'objet de l'invention a pour but de réaliser un procédé de charge d'une batterie à base de nickel assurant une bonne autonomie, une longévité et un rendement élevé lorsque la batterie est reliée à une source de courant intermittente et variable.

Ce but est atteint par les revendications annexées et notamment en ce que la charge de la batterie est interrompue lorsque la tension mesurée aux bornes de la batterie atteint un seuil de tension, fonction de la température mesurée, et représentatif d'une capacité chargée dans la batterie correspondant à un rendement de la charge supérieur ou égal à 90%.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre un dispositif utilisant le procédé de charge selon l'invention.

La figure 2 est une courbe représentative du nombre d'actionnements possibles dans le temps de deux systèmes autonomes identiques dont la batterie est chargée de manière différente.

La figure 3 est un graphique représentatif d'une fenêtre, fonction de la tension et de la température de la batterie, dans laquelle la charge est autorisée.

La figure 4 représente une courbe du rendement global de la charge en fonction de la capacité chargée.

La figure 5 est une courbe sous forme d'histogramme représentative du rendement de la charge en fonction d'une pluralité de plages de capacité chargée dans la batterie.

La figure 6 illustre pour une pluralité de températures l'évolution de la tension aux bornes de la batterie en fonction de la capacité chargée.

**Description de modes préférentiels de réalisation**

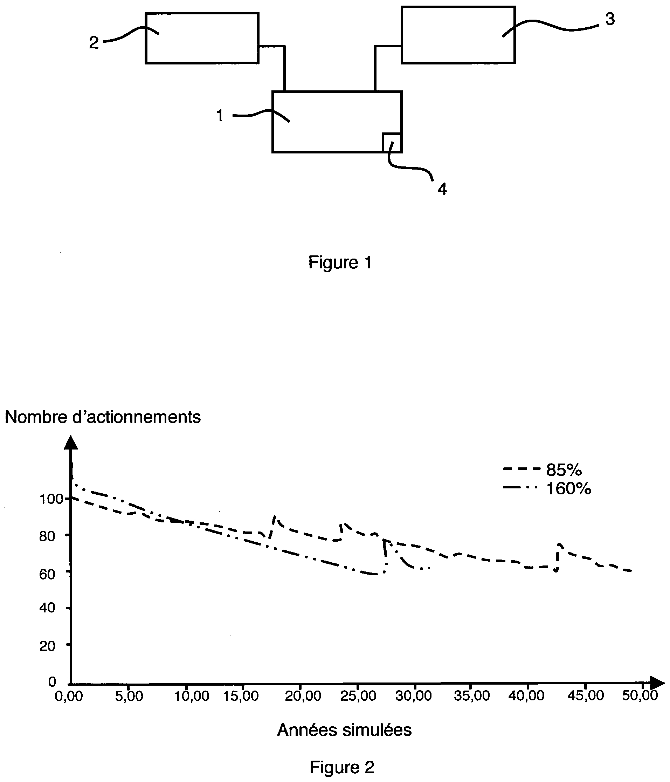

Une batterie à base de nickel peut être intégrée dans des systèmes dits autonomes. Dans un système autonome illustré à la figure 1, la batterie 1 est reliée à une source d'énergie 2 intermittente et à courant variable assurant la recharge de la batterie. Cette source d'énergie utilise en général des énergies renouvelables comme l'énergie solaire, l'énergie éolienne, l'énergie hydraulique ou encore l'énergie géothermique. À titre d'exemple, la batterie 1 peut être rechargée par des panneaux solaires, dès lors le passage d'un simple nuage peut diminuer l'intensité du courant de charge ou interrompre la charge de la batterie si les conditions d'ensoleillement sont trop défavorables.

Le fait de ne pas pouvoir contrôler le courant de charge rend inutilisables les procédés de charge de batteries à base de nickel de l'art antérieur. En effet, ici il n'est pas possible d'assurer une charge rapide à courant constant

De manière générale, il est nécessaire de fournir le plus d'autonomie à un utilisateur, c'est pourquoi les batteries actuelles au nickel sont surchargées pour que leur capacité puisse correspondre à 100% de leur capacité nominale. Cependant, cette course à l'autonomie ne prend pas en compte un critère important. Ce critère est la durée de vie des batteries, c'est-à-dire leur autonomie sur le long terme. En effet, la surcharge de la batterie 1 à base de nickel est nécessaire pour compenser les réactions parasites en fin de charge de la batterie afin de procurer la meilleure autonomie possible à un utilisateur. À long terme, ces réactions parasites ont des conséquences directes sur l'autonomie de la batterie 1. Ce phénomène est visible à la figure 2, qui illustre le nombre d'actionnements possibles d'un moteur 3 relié à la batterie 1 en fonction des années simulées à partir de deux systèmes autonomes similaires comportant chacun un moteur 3 et une batterie 1. Un actionnement dans le présent test correspond à un temps donné de fonctionnement du moteur à courant constant. La batterie 1 d'un premier système est toujours rechargée avec comme critère de fin de charge un critère représentatif d'une capacité chargée de 160% de la capacité nominale de la batterie 1. La batterie d'un second système est toujours rechargée avec comme critère de fin de charge un critère représentatif d'une capacité chargée de 85% de la capacité nominale de la batterie 1. Sur la figure 2, les premier et second systèmes autonomes sont respectivement associés à une courbe différente. La courbe associée à la capacité chargée de 160% de la capacité nominale de la batterie correspond en fait à une surcharge comme le préconise l'art antérieur. Les deux courbes tirées de la figure 2 permettent d'observer une diminution moins importante de l'autonomie de la batterie en termes de nombre d'actionnements du moteur pour la courbe associée au critère de fin de charge à 85% par rapport à la courbe associée au critère de fin de charge de 160%. En effet, au bout d'environ huit années simulées, le système associé à la courbe de capacité chargée de 85% présente une meilleure autonomie que le système surchargé.

Par capacité chargée, on entend la quantité de courant stockée dans la batterie lors de la charge pour obtenir une capacité en Ah de la batterie lors de la décharge. La capacité de la batterie est de manière générale inférieure à la capacité chargée. C'est-à-dire que pour N Ah stockés dans la batterie, cette dernière est capable de restituer N-x Ah. Il est alors possible d'établir le rendement pour une charge donnée en faisant le rapport sur la capacité chargée en fonction de la capacité récupérée lors de la décharge. Le rendement sera différent en fonction du courant utilisé pour la charge et/ou la décharge.

Le procédé de charge selon l'invention consiste à charger une batterie électrochimique à base de nickel de capacité nominale prédéterminée selon un critère de fin de charge prédéfini permettant de limiter la capacité chargée dans la batterie afin de travailler dans une fenêtre électrochimique où les réactions parasites n'ont pas lieu, ou sont négligeables. Le critère de fin de charge peut correspondre à un seuil de tension, de préférence prédéterminé par étalonnage.

Ainsi, le procédé de charge d'une batterie 1 électrochimique à base de nickel, de capacité nominale prédéterminée, et reliée, c'est-à-dire rechargée par une source d'énergie 2 intermittente et à courant variable, comporte au moins une mesure de la tension de la batterie et une mesure de la température représentative de la batterie 1. La charge de la batterie est interrompue lorsque la tension mesurée aux bornes de la batterie atteint un seuil de tension, de préférence prédéterminé et formant le critère de fin de charge, fonction de la température mesurée, et représentatif d'une capacité chargée de la batterie correspondant à un rendement de la charge supérieur ou égal à 90% du rendement maximum de cette charge. Le rendement maximum dépend de la valeur de courant utilisée.

Ce seuil de tension dont le rendement de la charge est supérieur ou égal à 90% peut correspondre à une capacité chargée de la batterie comprise entre 75 et 85% de la capacité nominale de la batterie. Un tel critère de fin de charge permet d'éviter la dégradation de la batterie en évitant la charge au-dessus de ce seuil. Ainsi, par critère de fin de charge, on entend un critère associé à l'interruption de la charge au-delà de laquelle la charge de la batterie n'est pas autorisée. Autrement dit, tant que la tension de la batterie reste supérieure au critère de fin de charge, sa charge est interdite

De plus, afin de limiter les dégradations de la batterie, la charge peut n'être autorisée que dans une gamme de température où le rendement lors de la charge reste correct. Autrement dit, le procédé intègre deux valeurs consignes de température Tmin et Tmax entre lesquelles la charge est autorisée. En effet, la température influe sur la cinétique des réactions chimiques, la mobilité des porteurs de charge, et l'importance des réactions parasites. À basse température, la diminution de la mobilité des porteurs de charge provoque l'augmentation de l'impédance interne de la batterie. Cette diminution de la mobilité des porteurs de charge limite donc le courant fourni par la batterie, et augmente la tension de charge à courant constant, produisant directement des dégradations internes. À haute température; les réactions parasites dégradantes sont favorisées impliquant une diminution importante du rendement de charge et une accélération de l'autodécharge. Ces températures peuvent être choisies en fonction de la plage de température de fonctionnement recommandée par le constructeur.

Le seuil de tension peut être constant à l'intérieur d'une plage de température et différent dans différentes plages de température. Dans une variante prenant en compte les deux valeurs consignes de température, la plage dans laquelle la charge est autorisée est alors divisée en plusieurs sous-plages, chaque plage étant associée à une tension maximale de fonctionnement. Ceci permet de tenir compte du comportement de la batterie en fonction de la température. En effet, plus la température est élevée plus le seuil de tension est bas.

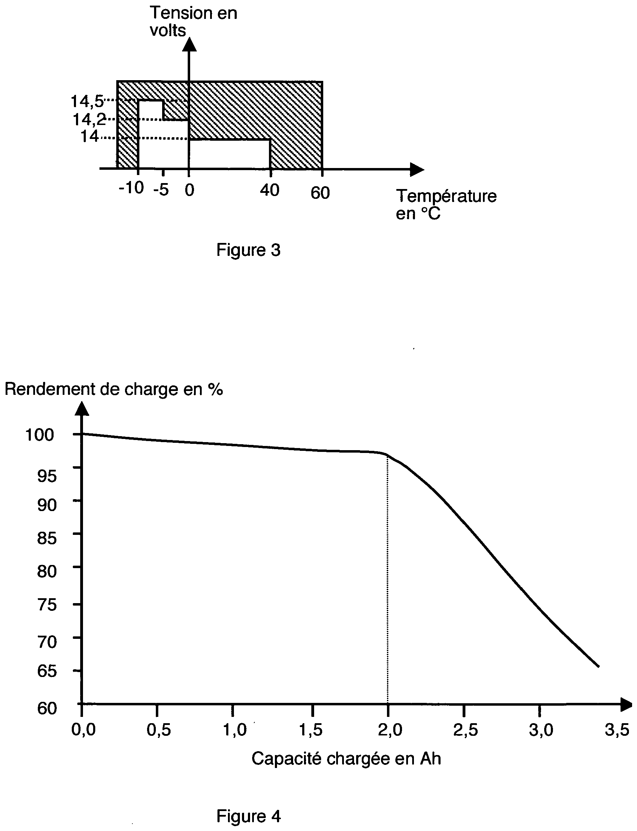

Un exemple particulier de gestion de la charge en fonction de la température mesurée et de la tension mesurée pour une batterie, composée de dix cellules de type NiMH de capacité nominale 2,1Ah et de tension nominale 12V, est illustré à la figure 3. Les valeurs consignes de température Tmin et Tmax sont respectivement égales à -10°C et 40°C. Une première plage associée à une tension de 14,5V est définie entre -10°C et -5°C, une deuxième plage associée à une tension de 14,2V est définie entre -5°C et 0°C, et une troisième plage associée à une tension de 14V est définie entre 0°C et 40°C.

Afin de définir cette fenêtre où la charge est autorisée, autrement dit le critère de fin de charge, les seuils de tensions et leur plage de température associée ont été déterminés lors d'une phase d'étalonnage de la batterie. La phase d'étalonnage est, de préférence, réalisée sur une batterie étalon lors de cycles de charge et de décharge à courant constant, cycles où les caractéristiques de la batterie sont maîtrisées (détection de fin de charge, intégration de la capacité chargée, etc).

La phase d'étalonnage comporte tout d'abord l'établissement d'une courbe de rendement représentative du rendement de la charge en fonction la capacité chargée dans la batterie. Cette courbe de rendement peut être établie par une succession de cycles de charge et de décharge sur la batterie étalon. La variation entre la capacité chargée dans la batterie et la capacité fournie par la batterie lors d'une phase de décharge consécutive à la charge permet d'établir ce rendement. Une telle courbe est illustrée à la figure 4. En fonction des batteries, la lecture de cette courbe permet de remarquer un point de rupture de pente au niveau duquel le rendement global chute. Ce point de rupture de pente peut être une sélection d'une valeur de capacité maximale de charge, et peut par exemple correspondre à une chute d'un facteur deux de la pente de la courbe de rendement. Sur la figure 4, ce point se situe environ à 2Ah de capacité chargée. Selon les caractéristiques des cycles, le niveau maximum du rendement varie mais l'allure générale de la courbe est figée.

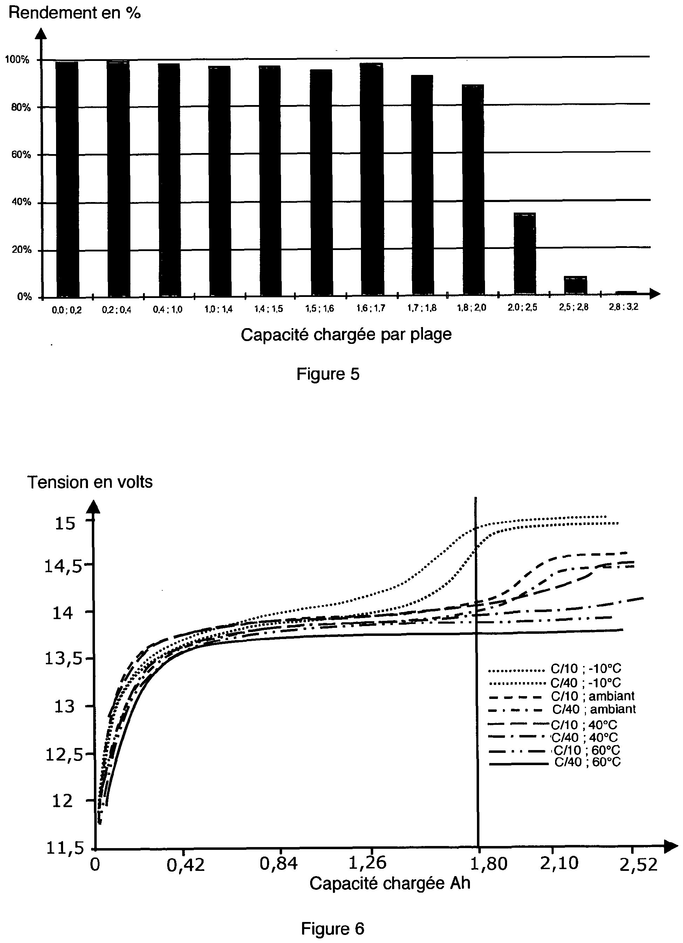

Selon un exemple particulier, la courbe de rendement correspond à un histogramme illustré à la figure 5 représentant le rendement par plages de capacité chargée, ce point correspond alors à une capacité maximale de charge associée à une chute de rendement. Le rendement pour une plage est alors déterminé par deux cycles de charge, chacun suivi d'une phase de décharge, en utilisant la formule suivante :

$$R_{gammeX;Y} = \frac{C_{dechY} - C_{dechX}}{C_{chY} - C_{chX}} \times 100 \qquad \text{Equation (1)}$$

avec $R_{gammeX;Y}$ la valeur en pourcentage du rendement de la plage considérée définie par les valeurs Y et X respectivement atteintes lors d'un premier et d'un deuxième cycle de charge, Y étant supérieur à X,

$C_{chX}$ la capacité en Ah fournie à la batterie lors du premier cycle de charge,

$C_{dechX}$ la capacité de la batterie en Ah récupérée lors d'une phase de décharge consécutive au premier cycle de charge,

$C_{chY}$ la capacité en Ah fournie à la batterie lors du deuxième cycle de charge,

$C_{dechY}$ la capacité de la batterie en Ah récupérée lors d'une phase de décharge consécutive au deuxième cycle de charge.

Par exemple, il a été réalisé un premier cycle de charge au cours duquel la capacité en Ah fournie à la batterie était égale à 2,81 Ah, il a été possible de récupérer 2,14Ah lors de la décharge. Ensuite, il a été réalisé un deuxième cycle de charge au cours duquel la capacité en Ah fournie à la batterie était égale à 3,21Ah, il a été possible de récupérer 2,15Ah lors de la décharge. L'injection de ces données dans l'équation (1) permet d'obtenir :

$$R_{gamme\,2,8;3,2} = \frac{C_{dech3,2} - C_{dech2,8}}{C_{ch3,2} - C_{ch2,8}} \times 100 = \frac{2,15 - 2,14}{3,2 - 2,8} \times 100 = 2,5\%$$

Ce rendement de 2,5% étant très faible, il correspond au fait que l'énergie est quasiment toute consommée par les réactions parasites dégradant physiquement la batterie.

Le choix du point de capacité maximale de charge pour permettre la meilleure longévité de la batterie n'est pas anodin. Il convient de déterminer ce point en analysant le rendement de la charge en fonction de la capacité chargée par rapport à la capacité nominale de la batterie. Sur la figure 5, ce point est, de préférence, déterminé par la plage précédent une chute drastique du rendement. Sur l'exemple particulier de la figure, il s'agit de la dernière plage ayant un rendement de charge supérieur à 90%. Dans cette dernière plage, on prendra, de préférence la borne inférieure qui correspond dans l'exemple de la figure 5 à 1,8Ah. Cette valeur de 1,8Ah correspond à la courbe de 85% de la capacité chargée à la figure 2.

La figure 5 a été obtenue en réalisant au moins dix plages entre 0 et la capacité nominale de la batterie. Un minimum de dix plages permet de mieux remarquer le point de capacité maximale de charge à sélectionner.

La valeur obtenue avec la courbe de la figure 5 est inférieure à celle de la courbe de la figure 4. Ainsi, l'autonomie sera plus faible avec comme capacité maximale chargée 1,8Ah que 2Ah, cependant la durée de vie sera augmentée.

Une fois la valeur de capacité maximale chargée choisie (1,8Ah dans le présent exemple), cette valeur peut être validée en réalisant un test de longévité comme celui illustré par la figure 2 avec la valeur de capacité maximale de charge et une valeur supérieure.

Le procédé de détermination du critère de fin de charge comporte ensuite l'établissement d'au moins une courbe de tension représentative de la tension de la batterie en fonction de la capacité chargée pour une température donnée représentative de la température de la batterie. La figure 6 illustre huit courbes, chaque courbe représente l'évolution de la tension en volts en fonction de la capacité chargée de la batterie en Ah, et est associée à une température (-10°C, ambiant, +40°C et +60°C) et à un courant de charge (C/10 et C/40). Pour une température donnée, on a donc un couple de courbes, la première courbe du couple étant réalisée lors d'une charge de 10 heures et la seconde courbe du couple lors d'une charge de 40 heures. On note ainsi que l'influence du courant de charge est faible lorsque celui-ci est faible.

De plus, dans l'exemple particulier de la figure 6, la gamme de température est limitée à -10°C à 40°C. En effet, la pente de la courbe associée à la température de 60°C est tellement faible aux alentours de la valeur de 1,8Ah qu'il n'est pas possible de déterminer la fin de charge.

Ensuite, pour chaque température, un seuil de tension correspondant à la valeur maximale de charge est déterminé. Le seuil peut être déterminé à partir de la courbe de tension correspondante, le seuil de tension est alors représentatif du critère de fin de charge. Ces seuils permettent ensuite de réaliser un graphique du type de celui de la figure 3 pour former la fenêtre dans laquelle la charge est autorisée. Le seuil de tension, fonction de la température, détermine le critère de fin de charge. Les données représentatives de la figure 3 peuvent être enregistrées dans une table de correspondance comportant plusieurs plages de températures chacune associée à un seuil de tension différent. Plus particulièrement, la table peut comporter une pluralité d'objets, chaque objet comportant deux entrées, une première entrée étant représentative de la plage de température, et une deuxième entrée représentative de la tension associée à ladite plage.

La température représentative de la batterie peut être déterminée par une sonde 4 (figure 1) placée à proximité des bornes de cette dernière ou dans cette dernière.

À titre d'exemple particulier de réalisation, en reliant une batterie électrochimique à base de nickel à un chargeur muni d'un gestionnaire de la charge de la batterie, le chargeur peut recharger la batterie en utilisant un critère de fin de ,charge dépendant de la tension et de la température de la batterie. Ainsi, lors d'une phase de charge, une boucle de mesure de la température et de la tension aux bornes de la batterie est exécutée, en fonction de ces mesures, le chargeur décide si oui ou non il doit continuer de charger la batterie.

L'utilisation d'un tel procédé de charge permettra de diminuer les maintenances des systèmes autonomes qui conduisent à remplacer régulièrement les batteries.

**Revendications**

1. Procédé de charge d'une batterie (1) électrochimique à base de nickel, de capacité nominale prédéterminée, comportant au moins une mesure de la tension de la batterie et une mesure de la température représentative de la batterie (1), la charge de la batterie (1) étant interrompue lorsque la tension mesurée aux bornes de la batterie (1) atteint un seuil de tension, fonction de la température mesurée, procédé **caractérisé en ce que** la batterie est rechargée par une source d'énergie (2) intermittente et à courant variable, et **en ce que** le seuil de tension est représentatif d'une capacité chargée dans la batterie correspondant à un rendement de la charge supérieur ou égal à 90%, le rendement de la charge étant défini par le rapport entre la capacité chargée dans la batterie (1) et la capacité récupérée lors de la décharge de la batterie (1).

2. Procédé selon la revendication 1, **caractérisé en ce que** le seuil de tension, fonction de la température mesurée, est représentatif d'une capacité chargée dans la batterie comprise entre 75 et 85% de la capacité nominale de la batterie.

3. Procédé selon l'une des revendications 1 et 2, **caractérisé en ce qu'**il comporte deux valeurs consignes de température (Tmin, Tmax) entre lesquelles la charge est autorisée.

4. Procédé selon l'une quelconque des revendications 1 à 3, **caractérisé en ce que** le seuil de tension est constant à l'intérieur d'une plage de température et différent dans différentes plages de température.

5. Procédé selon l'une quelconque des revendications précédentes, **caractérisé en ce que** le seuil de tension est représentatif d'un critère de fin de charge obtenu au préalable par :

   - l'établissement d'une courbe de rendement représentative du rendement de la charge en fonction de la capacité chargée dans la batterie,
   - la sélection d'une valeur de capacité maximale de charge correspondant à une rupture de pente de la courbe de rendement, la capacité maximale correspondant au rendement de la charge supérieur ou égal à 90%,
   - l'établissement d'au moins une courbe de tension représentative de la tension de la batterie en fonction la capacité chargée pour une température donnée représentative de la température de la batterie,
   - la détermination à partir de la courbe de tension correspondante, pour chaque température, d'un seuil de tension représentatif du critère de fin de charge, correspondant à ladite valeur de capacité maximale de charge.

6. Procédé selon la revendication 5 **caractérisé en ce qu'**il comporte la réalisation d'une table de correspondance comportant plusieurs plages de températures chacune associée à un seuil de tension différent.

7. Procédé selon l'une des revendications 5 et 6, **caractérisé en ce que** la courbe de rendement étant un histogramme représentatif du rendement en fonction de plages de capacité chargée, la valeur de capacité maximale de charge est comprise dans la dernière plage ayant un rendement de charge supérieur à 90%.

8. Procédé selon la revendication 7, **caractérisé en ce que** la valeur de capacité maximale chargée correspond à la borne inférieure de la dernière plage.

**Patentansprüche**

1. Verfahren zum Laden einer elektrochemischen Batterie (1) auf Nickelbasis mit einer vorbestimmten Nennkapazität, umfassend wenigstens eine Messung der Spannung der Batterie und eine Messung der für die Batterie (1) repräsentativen Temperatur, wobei das Laden der Batterie (1) unterbrochen wird, wenn die an den Anschlüssen der Batterie (1) gemessene Spannung einen Spannungsschwellwert erreicht, welcher von der gemessenen Temperatur abhängig ist, Verfahren, **dadurch gekennzeichnet, dass** die Batterie durch eine intermittierende Energiequelle (2) mit veränderlichem Strom wiederaufgeladen wird und dass der Spannungsschwellwert für eine in die Batterie geladene Kapazität, welche einem Wirkungsgrad der Ladung größer oder gleich 90 % entspricht, repräsentativ ist, wobei der Wirkungsgrad der Ladung durch das Verhältnis zwischen der in die Batterie (1) geladenen Kapazität und der beim Entladen der Batterie (1) zurückgewonnenen Kapazität definiert ist.

2. Verfahren nach Anspruch 1, **dadurch gekennzeichnet, dass** der Spannungsschwellwert, welcher von der gemessenen Temperatur abhängig ist, für eine in die Batterie geladene Kapazität im Bereich zwischen 75 und 85 % der Nennkapazität der Batterie repräsentativ ist.

3. Verfahren nach einem der Ansprüche 1 und 2, **dadurch gekennzeichnet, dass** es zwei Temperatursollwerte (Tmin, Tmax) umfasst, zwischen denen das Laden zugelassen ist.

4. Verfahren nach einem der Ansprüche 1 bis 3, **dadurch gekennzeichnet, dass** der Spannungsschwellwert innerhalb eines Temperaturbereiches konstant und in unterschiedlichen Temperaturbereichen verschieden ist.

5. Verfahren nach einem der vorhergehenden Ansprüche, **dadurch gekennzeichnet, dass** der Spannungsschwellwert für ein Kriterium des Ladungsendes repräsentativ ist, das zuvor erhalten wird durch:

- das Erstellen einer Wirkungsgradkurve, die für den Wirkungsgrad der Ladung in Abhängigkeit von der in die Batterie geladenen Kapazität repräsentativ ist,
- das Auswählen eines maximalen Ladekapazitätswertes, der einer Neigungsunterbrechung der Wirkungsgradkurve entspricht, wobei die maximale Kapazität dem Wirkungsgrad der Ladung größer oder gleich 90 % entspricht,
- das Erstellen wenigstens einer Spannungskurve, die für die Spannung der Batterie in Abhängigkeit von der geladenen Kapazität für eine für die Temperatur der Batterie repräsentative gegebene Temperatur repräsentativ ist,
- das Bestimmen eines für das Kriterium des Ladungsendes repräsentativen Spannungsschwellwertes, der dem maximalen Ladekapazitätswert entspricht, für eine jede Temperatur anhand der entsprechenden Spannungskurve.

6. Verfahren nach Anspruch 5, **dadurch gekennzeichnet, dass** es das Erstellen einer Entsprechungstabelle umfasst, die mehrere Temperaturbereiche enthält, welche jeweils einem anderen Spannungsschwellwert zugeordnet sind.

7. Verfahren nach einem der Ansprüche 5 und 6, **dadurch gekennzeichnet, dass** wenn die Wirkungsgradkurve ein Histogramm ist, das für den Wirkungsgrad in Abhängigkeit von Bereichen geladener Kapazität repräsentativ ist, der maximale Ladekapazitätswert in dem letzten Bereich mit einem Ladungswirkungsgrad von mehr als 90 % enthalten ist.

8. Verfahren nach Anspruch 7, **dadurch gekennzeichnet, dass** der Wert der geladenen maximalen Kapazität der unteren Grenze des letzten Bereiches entspricht.

**Claims**

1. Method for charging an electrochemical nickel-based battery (1) having a predetermined nominal capacity, comprising at least one measurement of the battery voltage and one measurement of the temperature representative of the battery (1), the charging of the battery (1) is stopped when the voltage measured at the terminals of the battery (1) reaches a voltage threshold, depending on the measured temperature,
method **characterized in that** the battery is recharged by an intermittent and variable-current source of energy (2) **in that** the voltage threshold, is representative of a capacity charged in the battery corresponding to a charging efficiency equal to or higher than 90%, the charing efficiency being defined by the ratio between the capacity charged in the battery (1) and the capacity provided by the battery during discharge of the battery (1).

2. Method according to claim 1, **characterized in that** the voltage threshold, depending on the measured temperature, is representative of a capacity charged in the battery comprised between 75 and 85% of the nominal capacity of the battery.

3. Method according to anyone of claims 1 and 2, **characterized in that** it comprises two set values of temperature (Tmin, Tmax) between which charging is allowed.

4. Method according to any one of claims 1 to 3, **characterized in that** the voltage threshold is constant within a range of temperature and different in various ranges of temperature.

5. Method according to any one of the foregoing claims, **characterized in that** the voltage threshold is representative of an end-of-charge criterion obtained beforehand by:

- plotting an efficiency curve representative of the charging efficiency according to the capacity charged in the battery,
- selecting a value of maximum charge capacity corresponding to a break in slope of the efficiency curve, the maximal capacity corresponding to the charging efficiency equal to or higher than 90%,
- plotting at least one voltage curve representative of the battery voltage according to the charged capacity, for a given temperature representative of the battery temperature,
- determining from the corresponding voltage curve, for each temperature, a voltage threshold representative of the end-of-charge criterion, corresponding to said value of maximum charge capacity.

6. Method according to claim 5, **characterized in that** it comprises the generation of a correlation table comprising several ranges of temperatures, each one being associated with a different voltage threshold.

7. Method according to anyone of the claims 5 and 6, **characterized in that** the efficiency curve being a histogram representative of the efficiency according to ranges of charged capacity, the value of maximum charge capacity is included in the last range having a charging efficiency higher than 90%.

8. Method according to claim 7, **characterized in that** the value of maximum charge capacity corresponds to the lower limit of the last range.

Figure 1

Nombre d'actionnements

- - - 85%
— ·· 160%

Années simulées

Figure 2

Figure 3

Figure 4

Rendement en %

Capacité chargée par plage

Figure 5

Tension en volts

........... C/10 ; -10°C
........... C/40 ; -10°C
— — — — C/10 ; ambiant
— · — · — C/40 ; ambiant
— — —C/10 ; 40°C
— · — · C/40 ; 40°C
— · · — C/10 ; 60°C
———— C/40 ; 60°C

Capacité chargée Ah

Figure 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1990890 A

- EP 0980130 A1